# EUROPEAN PATENT APPLICATION

(11) **EP 0 744 639 A2**
(43) Date of publication of application: **27.11.1996**
(21) Application number: 96302688.5
(22) Date of filing: 17.04.1996
(51) Int. Cl.: G02B 6/44, H01B 7/14, H01B 7/20

(54) **Submarine cable having a core in the form of a tube made of two metals and containing optical fibers**

(30) Priority: 28.04.1995 US 430643
(71) Applicant: AT&T IPM Corp., Coral Gables, Florida 33134 (US)
(72) Inventor: Chu, Tek-Che, Morganville, New Jersey 07751 (US)
(74) Representative: Johnston, Kenneth Graham

(57) **Abstract**

It is an object of the invention to provide an optical fiber cable (10) having hermetically-sealed optical fibers (25) and excellent strength characteristics without utilizing a costly welded steel tube. It is a further object of the invention to provide an optical fiber cable (10) that is capable of efficient and fast manufacture. These and other objects are provided by an optical fiber cable (10) employing a novel cable core (20), the cable core (20) comprising an inner, longitudinally extending, substantially-closed C-section tube (15); and an outer, hermetically-sealed, longitudinally extending outer tube (18) disposed concentrically around the C-section tube (15) in a substantially close-fitting manner. Advantageously, the C-section tube (15) assists in protecting the optical fibers (25) against crush, impact and pressure, and may also enhance the tensile strength of the optical fiber cable (10). The use of the C-section tube (15) also allows the optical fibers (25) to be efficiently introduced into the interior cavity of the C-section tube (15) during cable production. And, as the C-section tube (15) provides the desired strength characteristics of the cable core (20), the outer tube (18) may be advantageously optimized to hermetically seal the optical fibers (25) in the cable core (20). Thus, the outer tube (18) may be designed, for example, according to its sealing characteristics and manufacturability without significant regard for mechanical characteristics such as strength.

## Description

### Cross Reference to Related Application

United States patent application serial number 08/430634 was filed concurrently herewith.

### Technical Field

This invention relates to communications cables. More particularly, this invention relates to a submarine cable having a bi-metal tube core containing optical fibers.

### Background of the Invention

Optical fibers are in widespread use today as the information-carrying components of communications cables because of their large bandwidth capabilities and small size. However, they are mechanically fragile, exhibiting undesirable fracture under some tensile loads and degraded light transmission under some radial compressive loads due to a phenomena known as microbending loss. Optical fibers may be subjected to tensile loading during deployment and recovery operations of optical fiber cables. Radial compressive loads are typically exerted on the optical fibers as a result of hydrostatic water pressure in submarine applications. Radial compressive loads may also result from crush and impact from trawling, anchoring, and other ship-related activities. Optical fibers are also susceptible to a stress-accelerated chemical reaction between the glass material used in the optical fiber and water known as stress corrosion. Stress corrosion is a phenomena where small microcracks in the glass can increase in size, which may adversely affect the mechanical and optical performance of the optical fiber cable. Optical losses in the fibers due to the diffusion of hydrogen into the interior of the optical fiber cable (where, for example, hydrogen may be produced from corrosion of metallic portions of the cable), represents another potential limitation on optical fiber cable performance.

To protect the fragile optical fibers against excess loads, stress-corrosion. and hydrogen diffusion, some typical submarine optical fiber cables utilize a welded steel tube, in which optical fibers are contained, that provides a hermetic seal against environmental conditions. While such optical fiber cables generally perform satisfactorily in some applications, they may not be cost-effective in other applications, because the required steel welding operation is relatively slow and thereby restricts cable production rates. Moreover, additional material costs may be incurred because the choice of steel used for the tube is often made based upon its suitability for welding. For example. in some applications it may be necessary to utilize stainless steel because of its better welding characteristics as compared with less expensive steels.

### Summary of the Invention

Accordingly, it is an object of the invention to provide an optical fiber cable having hermetically-sealed optical fibers and excellent strength characteristics without utilizing a costly welded steel tube. It is a further object of the invention to provide an optical fiber cable that may be efficiently manufactured.

These and other objects are satisfied, in accordance with the invention, by an optical fiber cable employing a novel cable core, the cable core comprising an inner, longitudinally extending, substantially closed C-section tube; and, an outer, hermetically-sealed, longitudinally extending outer tube concentrically disposed around the C-section tube in a substantially close-fitting manner.

Advantageously, the C-section tube assists in protecting the optical fibers against crush, impact and pressure, and may also enhance the tensile strength of the optical fiber cable. The use of the C-section tube also allows the optical fibers to be efficiently introduced into the interior cavity of the C-section tube during cable production. And, as the C-section tube provides the desired strength characteristics of the cable core, the outer tube may be advantageously optimized to hermetically seal the optical fibers in the cable core. Thus, the outer tube may be designed, for example, according to its sealing characteristics and manufacturability without significant regard for mechanical characteristics such as strength.

In an illustrative example of an optical fiber cable, in accordance with the invention, a hermetically-sealed welded copper outer tube is concentrically swaged, in a substantially close fitting manner, around a steel C-section tube to form a bi-metal cable core. The steel C-section tube gives the cable core excellent strength characteristics. The use of copper facilitates fast and efficient welding to provide the desired hermesticity, while providing a current path as another desirable feature. Disposed within the bi-metal cable core is at least one optical fiber and optional plastic water-blocking material. A strength package is disposed around the bi-metal cable core to complete the optical fiber cable. In another illustrative example of the invention, an aluminum outer tube is extruded around a polymer C-section tube to form a hybrid-material cable core.

### Brief Description of the Drawing

FIG. 1 is a cross-sectional view of an illustrative example of an optical fiber cable, in accordance with the invention, which includes a bi-metal cable core.

FIG. 2 is a cross-sectional view of a second illustrative example of an optical fiber cable, in accordance with the invention, showing another example of strength package which may be used with the bi-metal cable core of the invention.

FIG. 3 is a cross-sectional view of a third illustrative example of an optical fiber cable, in accordance with the invention, which includes a plurality of bi-metal cable cores arranged in a six-around-one configuration.

FIG. 4 is a cross-sectional view of a fourth illustrative example of a communications cable, in accordance with the invention.

FIG. 5 is a cross-sectional view of a fifth illustrative example of an optical fiber cable, in accordance with the invention, which comprises a plurality of bi-metal cable cores and a strength package including a plurality of caged strength members.

### Detailed Description of the Invention

The following section will describe my invention with respect to specific embodiments such as overall size, dimensions and materials used to fabricate a communications cable which comes within the scope of the invention, and in particular, a submarine optical fiber cable. However, the invention is not limited to the specific dimensions or materials used in the following description, nor is it limited solely to optical or submarine applications. As will become evident in the discussion that follows, the described cable is useful in any application which requires a hermetically-sealed cable core, high tensile strength, and high resistance to crushing, impact, and abrasion in a cost effective manner.

It is also noted at the onset that while optical fibers are illustratively shown and discussed in the various embodiments that follow, it is intended that the invention not be restricted to the field of optical communications. Conventional electrical conductors, therefore, may also be used as an information-carrying component of the communications cable shown and described herein with appropriate modifications that will be apparent to those skilled in the art.

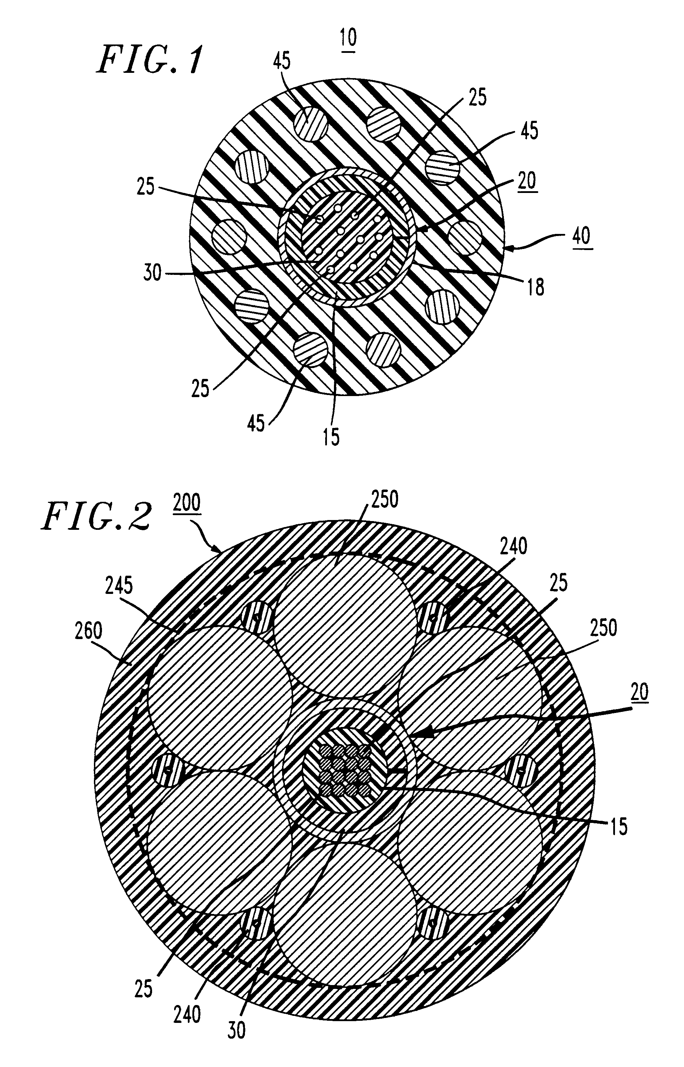

FIG. 1 is a cross-sectional view of an illustrative example of an optical fiber cable 10, in accordance with the invention. Optical fiber cable 10 comprises a cable core 20, and a strength package 40 which is disposed around cable core 20.

Cable core 20 comprises a longitudinally-extending C-section tube 15. Disposed within C-section tube 15 is at least one conventional optical fiber 25. Optical fibers 25 may be arranged within C-section tube 15 in any number of convenient ways, for example, loose, (i.e., randomly arranged), as illustrated, stranded in bundles, or in ribbons. C-section tube 15 may be formed, for example, from metallic or polymeric materials, or combinations thereof. Suitable metals include, for example, steel, aluminum, and copper. Suitable polymers include both conventional thermoplastic or thermosetting resins, with semi-elastic polymers being preferred. These polymers may be optionally combined with reinforcing fibers to achieve greater strength which may be desirable in some applications of the invention. Although other materials may be used with acceptable results, steel is a preferred material for many submarine applications of optical fiber cable 10, primarily due to its superior strength. In the illustrative example of the invention shown in FIG. 1, high strength steel is used to form C-section tube 15.

As shown in FIG. 1, C-section tube 15 is configured in what is conventionally termed a "closed C." In this configuration, C-section tube 15 is substantially cylindrical, but includes a seam that extends longitudinally along the length of the tube. Heretofore, a closed C-section tube would typically be made into a seamless tube -- for example, by laser welding the seam closed in the case of metal tubing -- in order to provide the desired hermesticity. Welding typically consumes significant production time because it requires that strict attention be paid to weld penetration, weld quality, and other factors that could affect proper sealing. Such welding, thus, adds additional manufacturing complexity and expense to cable cores known in the prior art which are advantageously avoided by the cable core of the present invention.

The use of a tube having a closed C-section further advantageously allows optical fibers 25 to be efficiently introduced into the interior cavity of the tube during cable production. Optical fibers 25 may be introduced into the interior cavity of the tube: 1) contemporaneously with fabrication of the C-section tube; or 2) after fabrication of the tube is completed. It is generally preferable to use the first method with metal C-section tubes and the second method with polymer C-section tubes. However, those skilled in the art will appreciate that either method may be applied to both polymer and metal C-section tubes in certain applications of the invention.

With the first method, a flat (i.e., substantially planar) strip of metal is formed into the C-section tube 15, which is closed around the optical fibers 25, using a conventional precision forming mill or die. For example, a tube forming mill may be used to roll the strip into the tube configuration. A longitudinally extending seam is thus created in C-section tube 15 where the edges of the metal strip abut together. Optical fibers 25 may be optionally surrounded by, and coated with, an insulating material 30, for example, thermoplastic or thermosetting elastomers and the like. One commercially available example of an appropriate insulating material is supplied under the designation "HYTREL" by the DuPont Corporation. The insulating material may also be a hydrophobic elastomeric water-blocking material, for example, polyurethane resin, to provide additional moisture protection to optical fibers 25, and particularly against longitudinal water ingress. Insulating material 30 may partially or, as illustrated in FIG. 1. completely fill C-section tube 15. Insulating material 30 may be conveniently introduced into the trough formed in the steel strip before the C-section becomes fully closed in the mill or die. The finished closed C-section tube may be optionally reduced in diameter. as needed by the particular application of the invention, by one, or a series, of conventional reducing dies. Such reducing may, advantageously, act to minimize any gaps in the seam of the C-section tube, and further strengthen the tube in some instances. The C-section tube 15 may also be coated with plastic or galvanized for further moisture protection.

The second method -- in which optical fibers 25 are introduced into the interior cavity of C-section tube 15 after the tube is fabricated -- is generally preferable for use with polymer C-section tubes. The polymer C-section tube may be fabricated, for example, using conventional extrusion processes where the longitudinal seam may be created during such extrusion, or added in a secondary slitting operation. In this second method, the finished closed C-section tube 15 is elastically deformed around the seam of the tube to create a longitudinal slit large enough to permit the passage of the optical fibers 25 into the interior cavity of the tube. Those skilled in the art will recognize that such elastic deformation may be realized, for example, by drawing the C-section tube through an appropriately configured die or mill. After optical fibers 25 are introduced into the interior, the C-section tube is allowed to return to its original substantially closed configuration.

Cable core 20 further includes outer tube 18 which is disposed about C-section tube 15. Outer tube 18 is preferably formed from a non-porous, conductive material such as copper or aluminum. It is important that the material selected be non-porous to effectuate a sound hermetic seal. The use of a conductive material allows the advantageous provision of an efficient conducting path for powering optical repeaters or regenerators (not shown) which are typically used in submarine cable applications. Additionally, the conductive path may be used for signaling or other communications purposes. Although non-conductive, non-porous materials may be used with satisfactory results in many applications, they may be somewhat less preferred in submarine applications because the powering or communications path is not provided. In this illustrative example, outer tube 18 is comprised of conventional copper tape that is formed directly over the C-section tube 15 so that outer tube 18 and C-section tube 15 are concentrically arranged in a substantially close fitting manner. Thus, a bi-metal cable core is herein achieved. Prior to this forming step, the copper tape is slit longitudinally to a uniform width such that a flat (i.e., substantially planar) strip of copper is provided. The copper tape may be rolled into a tube configuration using conventional tube forming mills as discussed above. Seams in the outer tube are welded closed to effect the hermetic seal of optical fibers 25 contained in cable core 20. Any appropriate welding process may be employed, for example, electric arc welding with a shielding gas. For copper, tungsten inert gas (i.e., "TIG") welding is preferred. If an aluminum outer tube is selected, then the seam may be welded closed using solid phase or other cold-welding processes, for example. Those skilled in the art will recognize that the welding of the copper or aluminum outer tube, in accordance with the principles of the invention, is significantly simpler and faster than welding a steel tube which is the common practice taught in the prior art. A further advantage of the present invention is that the C-section tube acts to buffer the delicate optical fibers against the heat, shock, and vibration that may be produced from the subsequent manufacturing operations, for example, the welding operation of the concentrically arranged outer tube 18. Outer tube 18 may also be fabricated from seamless tubing which is extruded directly around C-section tube 15. Those skilled in the art will appreciate that such a process is most preferably suited to applications requiring short lengths of optical fiber cable, Regardless of the fabrication method chosen, outer tube 18 may be optionally passed through a conventional reducing die, or a series of such dies, in order to reduce the diameter of outer tube 18.

In this illustrative example, outer tube 18 is swaged around C-section tube 15 after welding, using conventional swaging dies or mills, to increase the clamping force (i.e., a substantially uniform, radially-directed force) between C-section tube 15 and outer tube 18. It noted that such swaging should be considered optional, however, such increased clamping force may be desirable in certain applications because the support provided by C-tube 15 to outer tube 18 is enhanced which assists in reducing buckling of the comparatively thin-walled outer tube 18 when optical fiber cable 10 undergoes bending moments. Furthermore, the increased clamping force may also tend to advantageously maintain the substantially cylindrical configuration of C-section tube 15 under compressive loading of optical fiber cable 10 despite the presence of the longitudinally positioned seam in C-section tube 15.

Disposed around cable core 20 is strength package 40. In this illustrative example of the invention, strength package 40 comprises ten cylindrically-shaped strength members 45 having high tensile strength. Suitable materials for strength members 45 include, for example, metals such as steel, aluminum and copper. Preferably, strength members 45 are formed from steel, for example, galvanized improved plow steel having a nominal tensile strength of 200 kpsi. Alternatively, strength members may be formed from non-metallic materials such as nylon and other polyamide fibers. One example of a commercially available suitable polyamide fiber is supplied by DuPont under the designation "KEVLAR." Strength members 45 may be solid or stranded. Although strength members 45 are shown with circular cross-sections, it is contemplated that strength members having non-circular cross-sections may be used in some applications of the invention. It is contemplated that strength package 40 may include strength members 45 that are formed from one or more of the above described materials. For example. strength package 40 could contain five steel strength members, and five nylon strength members. As illustrated, strength members 45 are arranged about cable core 20 in a single layer. Those skilled in the art will recognize that the use of additional strength member layers would allow optical fiber cable 10 to withstand greater loads. Conversely, fewer strength members, or fewer layers of strength members, may be utilized in applications requiring less load carrying capacity with a resulting cost savings. Thus, the number of layers and the number and cross-sectional configuration of strength members 45 selected may vary from that illustrated in FIG. 1 without departing from the spirit and scope of the invention. Hence, the use of ten strength members in this example of the invention is merely illustrative. While strength members 45 may be arranged in either a straight or helical lay, the latter arrangement is preferred in most applications.

In the illustrative example of FIG. 1, strength members 45 in strength package 40 are arranged in a "caged" configuration where the strength members 45 are suspended in matrix 50 such that strength members 45 are not in direct contact with each other or cable core 20. Matrix 50 may comprise, for example, a thermoplastic resin such and low, medium, and high-density polyethylene, or thermosetting resins, or combinations thereof. High-density polyethylene is most preferably used in applications where high abrasion-resistance is desired. The use of caged strength members in a high-density polyethylene matrix advantageously obviates the need for a separate outer cable jacket with a concomitant cost savings. Matrix 50 may be, for example, disposed about cable core 20 using a conventional extrusion process.

FIG. 2 is a cross-sectional view of a second illustrative example of optical fiber cable 205, in accordance with the invention. FIG. 2 shows another example of strength package that may be used with cable core 20 that is described above and shown in FIG. 1. As shown in FIG. 2, strength package 200 comprises six cylindrically-shaped strength members 250 having high tensile strength which are disposed around cable core 20. in a "six-around-one" configuration. Strength members 250 may be similar in form and material to those shown in FIG. 1. Strength members 250 are wound, preferably in a helical lay, about cable core 20 in a single layer to form a shell 245. Strength members 250 may contact each other and cable core 20 in a close-fitting manner as illustrated in FIG. 2, or have small spaces in-between. The shell 245 formed by strength members 250 is a particularly strong and stable arrangement that isolates optical fibers 25 from high radial compressive loading. This strength and stability is enhanced if the strength members and the cable core 20 all have substantially identical outside diameters and are arranged in a close fitting manner as described above and as shown in FIG. 2. The close fitting arrangement advantageously allows radially directed forces to be uniformly distributed and borne by the strength members 250 which form shell 245 which is indicated by a dashed circle in FIG. 2. The over thickness of cable core 20, and the materials from which it is formed, may also be selected to further enhance the strength of optical fiber cable 205. While other than six strength members may also be used without departing from the spirit of the invention, six is the preferable number of strength members because a greater or lesser number reduces the strength and stability of the optical fiber cable. Strength members 250 are sized to provide optical fiber cable 205 with sufficient tensile strength to limit cable and optical fiber elongation during deployment and recovery operations. Strength members 250 also help to give optical fiber cable 205 considerable abrasion resistance.

The interstices formed between strength members 250 and cable core 20 may be filled with a hydrophobic elastomeric water-blocking material 235. Water-blocking material 235 may also advantageously help to reduce corrosion of strength members 250 and cable core 20.

Disposed within the grooves formed between adjacent strength members 250 are a plurality of conductors 240. Conductors 240 are wound with the same helical lay angle as used with strength members 250 when wound about cable core 20, as described above. Conductors 240 may be, for example, any electrically conducting material having low resistance such as copper or aluminum. Conductors 240 are preferably insulated with plastic in any conventional manner known in the art. The size of conductors 240 is selected so that they have a relatively small diameter in comparison to that of strength members 250. This relatively small size allows conductors 240 to be nestled well down into the grooves between strength members 250. Thus, it is desirable for the diameter of conductors 240 to be so determined that they fit within the total outer diameter of shell 245. This total outer diameter of shell 245 is indicated by the dashed circle in FIG 2. The nestling of conductors 240 well down in the grooves between strength members advantageously allows a considerable measure of protection to be afforded to the conductors by the strength members 250. Conductors 240 are useful as signal paths which may be used, for example, for telemetry, cable fault location, and other applications requiring moderate voltage.

An annular jacket 260 is disposed around strength members 250 and conductors 240. Jacket 260 may be, for example, a thermoplastic material such as medium or high-density polyethylene and the like. Such materials resist abrasion and corrosion and provide a suitable finish for cable handling and visibility. Alternatively, thermosetting polymers may be utilized for jacket 260, or combinations of thermoplastic and thermosetting polymers may be utilized. The thickness of jacket 260 is a function of the desired degree of protection. Jacket 260 may be disposed around strength members 250 and conductors 240, for example, using a conventional extrusion process.

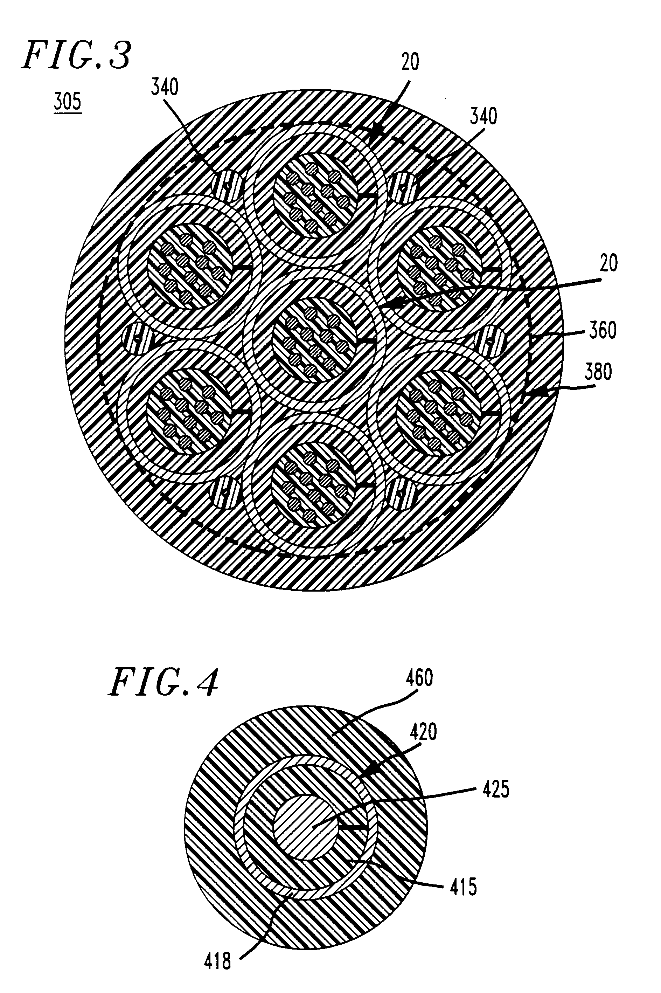

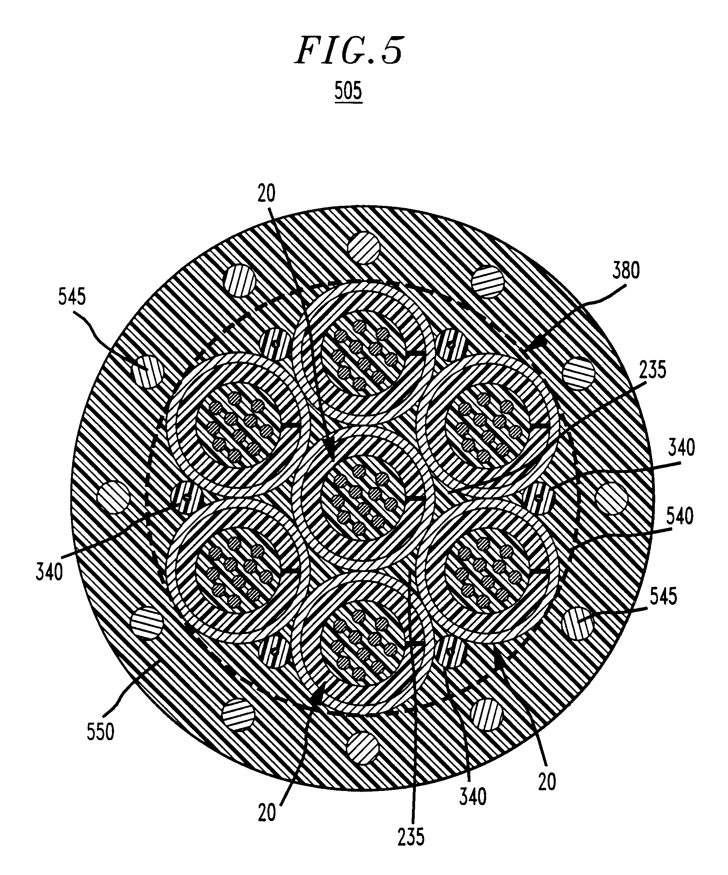

FIG. 3 is a cross-sectional view of a third illustrative example of an optical fiber cable 305, in accordance with the invention. In this illustrative example, a plurality of cable cores 20 (FIG. 1) are arranged to form cable core pack 380 in a six-around-one configuration, as shown. Conductors 340 are disposed within the grooves between adjacent cable cores 20 in a similar arrangement as shown in FIG. 2. Disposed around cable core pack 380 is an annular jacket 360. Annular jacket 360 may be similar in form to that shown in FIG. 2. It is emphasized that this six-around-one configuration for cable cores 20 is merely illustrative, and cable cores 20 may be arranged in other configurations to form a cable core pack which are intended to fall within the spirit and scope of the invention. Those skilled in the art will recognize that greater or fewer than seven cable cores 20 may be advantageously utilized depending upon the number of optical fibers that are required for a particular application of the invention. Cable cores 20 may be arranged in a substantially close-fitting manner as shown in FIG. 3, or be arranged with spaces in-between. Moreover, it may be desirable to utilize one or more "dummy" cable cores 20 that do not contain optical fibers in certain applications. A strength package 540 may be optionally utilized, as shown in FIG. 5, in conjunction with cable core pack 380. Strength package 540 includes, in the illustrative optical fiber cable 505 shown in FIG. 5, a plurality of strength members 545 that are arranged in a caged configuration in matrix 550. Strength members 545 and matrix 550 may be similar in arrangement and material to those elements shown in FIG. 1.

FIG. 4 is a cross-sectional view of a fourth illustrative example of the invention. Shown in FIG. 4 is a communications cable, in accordance with the invention, which may be used, for example, in applications requiring co-axial type conductors. In this illustrative example, C-section tube 415 is formed from a polymeric material. Disposed within C-section tube 415 is conductor 425. Conductor 425 is preferably a stranded copper or aluminum conductor. Conductor 425 may partially fill, or as illustrated in FIG. 4, completely fill the interior cavity of C-section tube 415. It is noted that optical fibers (not shown) may also be contained within the interior cavity, either alone, or in combination with copper conductor 425. Outer tube 418, in this illustrative example, comprises a seamless aluminum tube which is extruded (using conventional extrusion processing) directly around C-section tube 415, thus creating a hybrid-material cable core 420. Outer tube 418 may be reduced in diameter and swaged, as discussed above, in order to increase the clamping force on C-section tube 415, if desired. Disposed around cable core 420 is an annular jacket 460 which, as above, may be formed from a thermoplastic material such as medium or high-density polyethylene and the like. A co-axial conductor cable is thus achieved as the conductor 425 provides a first conducting path, and the aluminum outer tube 418 provides the second conducting path, where the first and second paths are separated by C-section tube 415 which functions as an insulator.

Without in any way affecting the generality of the foregoing description, Table 1 below presents typical sizes of the various elements of optical fiber cable 10. Table 2 presents sizes of the various elements of optical fiber cable 205. Table 3 presents sizes of the various elements of optical fiber cable 305. Table 4 presents sizes of the various elements of communications cable 405. Table 5 presents sizes of the various elements of optical fiber cable 505.

**TABLE 1**

| | |
|---|---|
| Inside diameter of C-section tube | 0.155 in. |
| Outside diameter of C-section tube | 0.195 in. |
| Outside diameter of outer tube | 0.225 in. |
| Outside diameter of strength members | 0.0692 in. |
| Outer diameter of strength package | 0.600 in. |

**TABLE 2**

| | |
|---|---|
| Inside diameter of C-section tube | 0.155 in. |
| Outside diameter of C-section tube | 0.195 in. |
| Outside diameter of outer tube | 0.225 in. |
| Outside diameter of conductors | 0.075 in. |
| Outer diameter of strength member shell | 0.675 in. |
| Thickness of plastic jacket | 0.1625 in. |
| Outer diameter of optical fiber cable | 1.00 in. |

**TABLE 3**

| | |
|---|---|
| Inside diameter of C-section tube | 0.155 in. |
| Outside diameter of C-section tube | 0.195 in. |
| Outside diameter of outer tube | 0.225 in. |
| Outer diameter of cable core pack | 0.675 in. |
| Thickness of plastic jacket | 0.1625 in. |
| Outer diameter of optical fiber cable | 1.00 in. |

**TABLE 4**

| | |
|---|---|
| Inside diameter of C-section tube | 0.155 in. |
| Outside diameter of C-section tube | 0.195 in. |
| Outside diameter of outer tube | 0.225 in. |
| Thickness of plastic jacket | 0.200 in. |
| Outer diameter of communications cable | 0.625 in. |

**TABLE 5**

| | |
|---|---|
| Inside diameter of C-section tube | 0.155 in. |
| Outside diameter of C-section tube | 0.195 in. |
| Outside diameter of outer tube | 0.225 in. |
| Outer diameter of cable core pack | 0.675 in. |
| Outside diameter of strength members | 0.0692 in. |
| Outer diameter of optical fiber cable | 1.25 in. |

## Claims

1. An apparatus, comprising:
an inner, longitudinally extending, substantially-closed C-section tube; and
an outer, longitudinally extending, hermetically-sealed tube concentrically disposed around said inner, longitudinally extending, substantially closed C-section tube in a substantially close-fitting manner.

2. The apparatus as claimed in claim 1 wherein said inner, longitudinally extending, substantially-closed C-section tube is formed from a material selected from aluminum, copper, plastic and steel, or combinations thereof, and/or said outer, longitudinally extending, hermetically sealed tube is formed from a material is selected from copper and aluminum, or combinations thereof.

3. The apparatus as claimed in claim 1 wherein said outer, hermetically-sealed, longitudinally extending tube comprises either a welded copper tube, or a seamless tube, for example an aluminium tube.

4. The apparatus as claimed in claim 1 further including a strength package, including for example a plurality of substantially cylindrically-shaped longitudinally extending strength members.

5. The apparatus as claimed in claim 4, wherein said strength package further includes a matrix disposed about said an outer, longitudinally extending, hermetically-sealed tube and said strength members so that said strength members are suspended in said matrix without contacting said an outer, longitudinally extending, hermetically-sealed tube and without contacting adjacent ones of said strength members.

6. The apparatus as claimed in claim 5, wherein predetermined ones of said plurality of substantially cylindically-shaped longitudinally extending strength members are formed from a material selected from steel, for example galvanized improved plow steel, copper, aluminum, and polyamide, or combinations thereof.

7. The apparatus as claimed in claim 5, wherein said matrix either comprises a material selected from the group consisting of thermoplastic polymers of thermosetting polymers, and combinations thereof, or
is formed from a material selected from the group consisting of medium-density polyethylene, high-density polyethylene, and thermosetting resins, or combinations thereof.

8. The apparatus as claimed in claim 1, further including at least one component for carrying information disposed in the interior cavity of said longitudinally extending, substantially-closed C-section tube.

9. The apparatus as claimed in claim 8, wherein said at least one component for carrying information is selected from the group consisting of optical fibers and electrical conductors, or combinations thereof.

10. The apparatus as claimed in claim 9, further including an elastomeric material contacting and surrounding said at least one component for carrying information disposed within said interior cavity of said longitudinally extending, substantially-closed, C-section tube.

11. The apparatus as claimed in claim 10, wherein said elastomeric material substantially fills said inner, longitudinally extending, substantially-closed C-section tube.

12. The apparatus as claimed in claim 1, further including an annular jacket disposed about said outer, hermetically-sealed, longitudinally extending tube.

13. The apparatus as claimed in claim 9, wherein said optical fibers are arranged in a configuration selected from the group consisting of loose, bundles, or ribbons.

14. A communications cable, comprising:
a bi-metal cable core, including a welded, hermetically-sealed copper outer tube that is concentrically disposed in a substantially close fitting manner about an inner, longitudinally-extending, substantially closed C-section steel tube;
at least one optical fiber disposed within said bi-metal cable core;
a strength package disposed about said bi-metal cable core, said strength package including a plurality of stranded steel strength members disposed in a single layer about said bi-metal cable core; and
a polyethylene matrix disposed about said bi-metal cable core and said strength package so that said stranded steel strength members are suspended in said polyethylene matrix without contacting said bi-metal core and without contacting adjacent ones of said stranded steel strength members.

15. The communications cable of claim 14, wherein said predetermined ones of said stranded steel strength members are formed from a material selected from the group consisting of steel, copper, aluminum, and polyamide, or combinations thereof.

16. A communication cable, comprising:
an inner, longitudinally extending, substantially-closed C-section tube;
an outer, longitudinally extending, hermetically-sealed tube concentrically disposed around said inner, longitudinally extending, substantially closed C-section tube in a substantially close-fitting manner;
a plurality of substantially cylindrically-shaped, longitudinally extending strength members disposed in a single layer about said outer, longitudinally extending, hermetically-sealed tube in a substantially close fitting manner; and
at least one optical fiber disposed within the interior cavity of said inner, longitudinally extending, substantially-closed C-section tube.

17. The communications cable as claimed in claim 16 further including a water-blocking material disposed in interstices between said plurality of cylindrically-shaped longitudinally extending strength members and said outer, longitudinally extending, hermetically-sealed tube.

18. The communications cable as claimed in claim 16, further including either an elastomeric material contacting and surrounding said at least one optical fiber disposed within the interior cavity of said inner, longitudinally extending, substantially-closed C-section tube, or
a plurality of conductors such as insulated conductors, disposed in grooves between adjacent ones of said plurality of substantially cylindically-shaped longitudinally extending strength members, or
an annular jacket disposed around said plurality of cylindrically-shaped longitudinally extending strength members.

19. The communications cable as claimed in claim 18, wherein said elastomeric material substantially fills said interior cavity of said inner, longitudinally extending, substantially-closed C-section tube.

20. The communications cable as claimed in claim 19, wherein said annular jacket comprises a material selected from the group consisting of medium density polyethylene, high density polyethylene, and thermosetting resins, or combinations thereof.

21. The communications cable as claimed in claim 16, wherein said plurality of cylindrically-shaped longitudinally extending strength members are wound in a helical lay about an outer, longitudinally extending, hermetically-sealed tube.

22. The communications cable as claimed in claim 18, wherein said conductors are wound in a helical lay about said plurality of cylindrically-shaped longitudinally extending strength members.

23. A communications cable, comprising:
a cable core pack including a plurality of cable cores arranged in a substantially close fitting configuration, each of said cable cores including,
an inner, longitudinally extending, substantially-closed C-section tube. and
an outer, longitudinally extending, hermetically-sealed tube concentrically disposed around said inner, longitudinally extending, substantially closed C-section tube in a substantially close-fitting manner.

24. The communications cable as claimed in claim 23, wherein said plurality of cable cores comprises seven cable cores having substantially uniform diameters and arranged in a six-around-one configuration so that six of said seven cable cores form a shell around a seventh of said seven cable cores.

25. The communications cable as claimed in claim 23, further including either a strength package disposed about said cable core pack, or
an annular jacket disposed about said cable core pack, or
at least one optical fiber disposed in predetermined ones of said cable cores in said cable core pack.

26. A communications cable having substantially co-axial conductive elements, comprising:
a first longitudinally extending conductive element;
an inner, substantially closed C-section electrically insulating tube disposed about said first longitudinally extending conductive element;
an outer, longitudinally extending, hermetically-sealed conductive tube, acting a second conductive element, concentrically disposed around said inner, longitudinally extending, substantially closed C-section tube in a substantially close-fitting manner so as to arrange said first and said second conductive elements in a substantially co-axial configuration; and
an electrically insulating annular jacket disposed about said outer, longitudinally extending, hermetically-sealed conductive tube.
